# EUROPÄISCHE PATENTSCHRIFT

(11) **EP 2 689 947 B1**
(45) Veröffentlichungstag und Bekanntmachung des Hinweises auf die Patenterteilung: **13.12.2017**
(21) Anmeldenummer: 13001659.5
(22) Anmeldetag: 30.03.2013
(51) Int. Cl.: B60J 5/04, B60R 13/08

(54) **Kraftfahrzeugtür**
Motor vehicle door
Porte de véhicule automobile

(30) Priorität: 25.07.2012 DE 102012014720
(43) Veröffentlichungstag der Anmeldung: 29.01.2014
(73) Patentinhaber: Volkswagen Aktiengesellschaft, 38440 Wolfsburg (DE)
(72) Erfinder: Grünewald, Mirko, 39345 Flechtingen (DE); Almeida, Pedro, 38479 Tappenbeck (DE); Kühn, Olaf, 38165 Wendhausen (DE)

(56) Entgegenhaltungen:
- WO-A1-03/031211
- DE-A1-102009 039 712
- US-A1- 2005 184 555

## Beschreibung

Die Erfindung betrifft eine Kraftfahrzeugtür mit einer einen Elektromotor aufweisenden Antriebseinheit zur Steuerung der Bewegung einer Fensterscheibe in einer durch die Kraftfahrzeugtür gebildeten Türebene.

Die DE 10 2008 048 236 A1 beschreibt bereits einen elektrischen Fensterheberantrieb mit einem Elektromotor, welcher über mehrere Befestigungspunkte, zum Beispiel mittels Schrauben, Bolzen oder anderer Befestigungselemente, mit einem Türmodul eines Kraftfahrzeugs verbunden ist. Das Türmodul weist Flächenmerkmale auf, welche eine Fläche des Türmoduls unterbrechen, um die Übertragung von mechanischer Schwingungsenergie von dem Türmodul auf den Fensterheberantrieb und von dem Fensterheberantrieb auf das Türmodul zu verringern bzw. zu dämpfen. Die Flächenmerkmale weisen mehrere wellenförmige Erhebungen und Vertiefungen auf und bilden eine Membran, welche integral mit dem Türmodul geformt ist und die Befestigungspunkte zwischen dem Fensterheberantrieb und dem Türmodul umgibt. Dabei kann eine einzige Membran sämtliche Befestigungspunkte umgeben oder jedem Befestigungspunkt kann eine eigenständige Membran zugeordnet sein.

Aus der DE 10 2006 053 460 A1 ist eine aus einem elektrischen Antriebsmotor und einem Getriebegehäuse bestehende Antriebseinheit für einen Fensterheber einer Kraftfahrzeugtür bekannt, welche in eine Aufnahmevorrichtung eines Türmoduls einsetz- und fixierbar ist.

Außerdem beschreibt die DE 198 33 185 A1 ein einstückiges Türmodul umfassend eine selbsttragende Trägerplatte aus Metall mit einer Halterung zur Fixierung eine Elektromotors für einen Fensterheber.

Des Weiteren ist aus der DE 10 2009 039 712 A1 eine Antriebsbaueinheit für einen Fensterheber einer Kraftfahrzeugtür, mit einem Antrieb, der einen Antriebsmotor als Antriebskomponente aufweist, mit einem Aggregatträger, an dem der Antrieb festgelegt ist, und mit einer Dämpfungsmatte, über die sich der Antrieb am Aggregatträger abstützt, bekannt. Der Aggregatträger ist ein Strukturbauteil der Fahrzeugtür. Die Dämpfungsmatte bildet einen um den Antrieb umlaufenden Steg aus, der ausgehend vom an der Türstruktur befestigten Aggregatträger bis zu der dem Aggregatträger gegenüberliegenden Türinnenverkleidung reicht.

Schließlich ist aus der WO 03/031211 A1 eine als Aggregatträger für einen Antrieb eines Fensterhebers fungierende Türinnenverkleidung bekannt, wobei der besagte Antrieb von einem Steg umgeben ist.

Der Erfindung liegt die Aufgabe zugrunde, eine Kraftfahrzeugtür mit einer einen Elektromotor aufweisenden Antriebseinheit für die Verstellung einer Fensterscheibe zur Verfügung zu stellen, welche derart ausgestaltet ist, dass die Wahrnehmbarkeit von Betriebsgeräuschen der Antriebseinheit im Innenraum des Kraftfahrzeugs reduziert wird.

Diese Aufgabe wird gelöst mit einer Kraftfahrzeugtür gemäß den Merkmalen des Patentanspruchs 1. Die Unteransprüche betreffen besonders zweckmäßige Weiterbildungen der Erfindung.

Ausgehend von einer Kraftfahrzeugtür mit einer einen Elektromotor aufweisenden Antriebseinheit zur Steuerung der Bewegung der Fensterscheibe in einer durch die Kraftfahrzeugtür gebildeten Türebene, wobei eine Tragplatte der Kraftfahrzeugtür mit einem zumindest den Elektromotor der Antriebseinheit umfänglich umschließenden Schallschutzelement verbunden ist, welches derart ausgebildet und angeordnet ist, dass während des Betriebs des Elektromotors entstehende Luftschallwellen durch Reflexion an einer Ausbreitung in Richtung der Türebene der Kraftfahrzeugtür gehindert werden, wobei die Tragplatte als Türinnenverkleidung ausgebildet ist, welche eine dem Kraftfahrzeuginnenraum zugewandte Sichtseite und eine dem Kraftfahrzeuginnenraum abgewandte Rückseite aufweist, , und wobei das Schallschutzelement auf der Rückseite der Türverkleidung angeordnet ist, wird die gestellte Aufgabe dadurch gelöst, dass das Schallschutzelement ein Funktionselement aus einem den Luftschall dämmenden und/oder dämpfenden Material aufweist, welches formschlüssig mit dem Schallschutzelement verbunden ist, dass die durch das Schallschutzelement eingeschlossene Fläche auf der Rückseite der Türinnenverkleidung von einer Funktionsmatte aus einem den Luftschall dämmenden und/oder dämpfenden Material abgedeckt ist, und dass die Funktionsmatte und das Funktionselement einteilig ausgebildet sind. Mittels einer derartigen akustischen Abschottung des Elektromotors lassen sich die während der Verstellung der Fensterscheibe bzw. die während des Betriebs des Elektromotors entstehenden Motorgeräusche durch Dämmung örtlich auf den Ort der Entstehung begrenzen. Die während des Betriebs des Elektromotors entstehenden Luftschallwellen treffen dabei kurz nach der Entstehung auf das Schallschutzelement und werden dort reflektiert, wodurch die Wahrnehmbarkeit der Betriebsgeräusche im Innenraum erheblich reduziert werden kann. Hierdurch erfolgt eine Dämpfung und Dämmung der Betriebsgeräusche nicht nur in Richtung der Türebene, sondern auch in Richtung des Fahrzeuginnenraums, also quer zur Türebene. Selbstverständlich kann das Schallschutzelement zusätzlich auch noch weitere Bauteile der Antriebseinheit, beispielsweise eine Seiltrommel, umschließen. Hierdurch wird die Wahrnehmbarkeit von Betriebsgeräuschen der gesamten Antriebseinheit im Innenraum des Kraftfahrzeugs zusätzlich verringert.

Dabei hat es sich als besonders praxisnah erwiesen, dass das Schallschutzelement stoffschlüssig und/oder formschlüssig und/oder kraftschlüssig mit der Türinnenverkleidung verbunden ist. Hierdurch wird insbesondere der Zusammenbau der Kraftfahrzeugtür erleichtert, da durch eine derartige Verbindung eine Relativverschiebung zwischen der Türinnenverkleidung und dem Schallschutzelement während der Montage der Türinnenverkleidung an der Kraftfahrzeugtür verhindert wird. Die Fixierung des Schallschutzelements an der Türinnenverkleidung kann durch verrastende Clips, durch eine Verschraubung oder durch eine Verschweißung erfolgen. Selbstverständlich kann die Fixierung auch durch eine Kombination der genannten Verbindungsarten erfolgen.

Weiterhin ist vorgesehen, dass das Schallschutzelement und die Türinnenverkleidung aus dem gleichen Kunststoff bestehen und/oder dass das Schallschutzelement und die Türinnenverkleidung einteilig ausgebildet sind. Durch die Verwendung des gleichen Kunststoffs weisen beide Bauteile denselben Ausdehnungskoeffizienten auf, sodass die beiden Bauteile bei hohen oder niedrigen Außentemperaturen die gleichen Ausdehnungseigenschaften aufweisen. Hierdurch können ein Verzug der Bauteile oder Spannungsrisse in den Bauteilen sowie Geräusche durch Relativbewegungen (Knarzen) verhindert werden. Der Arbeitsschritt der Fixierung des Schallschutzelements an der Türinnenverkleidung kann entfallen, wenn das Schallschutzelement und die Türinnenverkleidung einteilig ausgestaltet sind.

Die Wahrnehmbarkeit der Betriebsgeräusche des Elektromotors im Innenraum des Kraftfahrzeugs wird auch dadurch verringert, dass das Schallschutzelement und die Türinnenverkleidung aus unterschiedlichen Kunststoffen bestehen und/oder dass das Schallschutzelement und die Türinnenverkleidung im Zweikomponenten-Spritzgießverfahren herstellbar sind. Für das Schallschutzelement kann ein Kunststoff ausgewählt werden, welcher im Hinblick auf eine Schalldämmung bzw. eine Schalldämpfung optimale Eigenschaften aufweist, während für die Türinnenverkleidung ein Kunststoff ausgewählt werden kann, der hinsichtlich Stabilität, Steifigkeit, Wirtschaftlichkeit, Tragfähigkeit und je nach Funktion der Türinnenverkleidung auch hinsichtlich Optik und Haptik optimale Eigenschaften aufweist.

Eine weitere vorteilhafte Ausgestaltung der vorliegenden Erfindung wird auch dadurch geschaffen, dass das Schallschutzelement ringförmig ausgebildet ist und/oder dass das Schallschutzelement als Steg ausgebildet ist, welcher sich aus einer Ebene der Türinnenverkleidung hinaus, insbesondere annähernd orthogonal zu dieser erstreckt, und die Abmessungen des Stegs in Richtung dieser Erstreckung zumindest annähernd den Abmessungen des Elektromotors in derselben Richtung entsprechen. Hierdurch wird auf konstruktiv einfache Art und Weise ein wirksames Schallschutzelement zur Reflexion der vom Elektromotor bzw. der Antriebseinheit erzeugten Luftschallwellen zur Verfügung gestellt. Unter einer annähernd orthogonalen Erstreckung des Stegs wird ein Winkel von 90° +/- 5° zwischen dem Steg und der Ebene der Türinnenverkleidung verstanden.

Außerdem erweist es sich als besonders zweckmäßig, wenn in einer Ausgestaltung der Erfindung das Schallschutzelement ein Funktionselement aus einem Schaum oder Vlies aufweist. Durch das Funktionselement aus einem Schaum oder einem Vlies werden die Dämmwirkung des Schallschutzelements verstärkt und gleichzeitig eine Dämpfung der Luftschallwellen innerhalb des von dem Schallschutzelement begrenzten Raums erreicht.

Wie die Erfindung weiter vorsieht, ist in einer Ausführungsform das Funktionselement auf das als Steg ausgebildete Schallschutzelement aufsteckbar.

Eine besonders effektive Ausgestaltung der Erfindung sieht vor, dass eine der Türinnenverkleidung abgewandte Stirnseite des Schallschutzelements derart an einem Strukturbauteil der Kraftfahrzeugtür anliegt, dass die Türinnenverkleidung, das Strukturbauteil und das Schallschutzelement einen abgeschlossener Raum bilden, in welchem zumindest der Elektromotor der Antriebseinheit angeordnet ist. Durch diese nahezu vollständige Kapselung des Elektromotors werden die Betriebsgeräusche des Motors besonders effektiv gedämmt bzw. gedämpft.

In diesem Fall erweist es sich als besonders zweckmäßig, dass das Schallschutzelement zumindest abschnittsweise Belüftungsschlitze zur Kühlung des Elektromotors der Antriebseinheit aufweist. Hierdurch kann die im Betrieb des Elektromotors entstehende Wärme wirkungsvoll aus dem durch das umlaufende Schallschutzelement begrenzten Raum abgeführt werden, wodurch ein Ausfall des Elektromotors durch Überhitzung verhindert werden kann.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: ein Kraftfahrzeug in einer Seitenansicht;
- Fig. 2: eine Kraftfahrzeugtür in einer Seitenansicht;
- Fig. 3: eine perspektivische Darstellung einer Tragplatte mit einem Schallschutzelement;
- Fig. 4: die Tragplatte aus Figur 3 mit einer Antriebseinheit;
- Fig. 5: eine vergrößerte Darstellung der in Figur 4 dargestellten Tragplatte mit der Antriebseinheit;
- Fig. 6: die in Figur 5 dargestellte Tragplatte mit der Antriebseinheit in einer geschnittenen Ansicht.

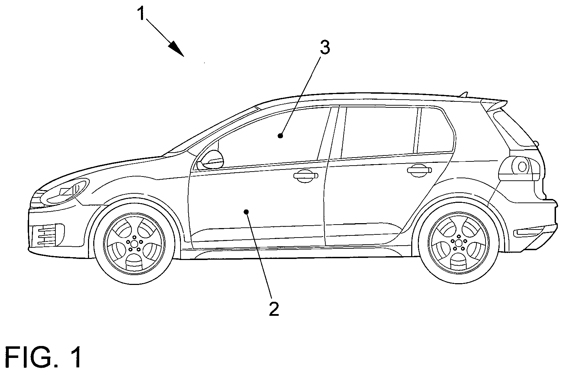

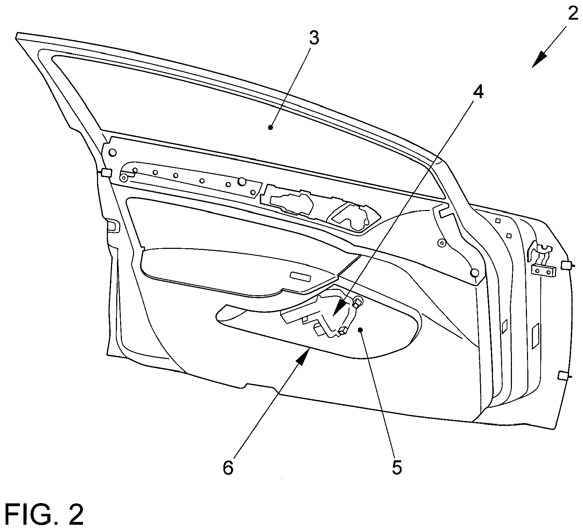

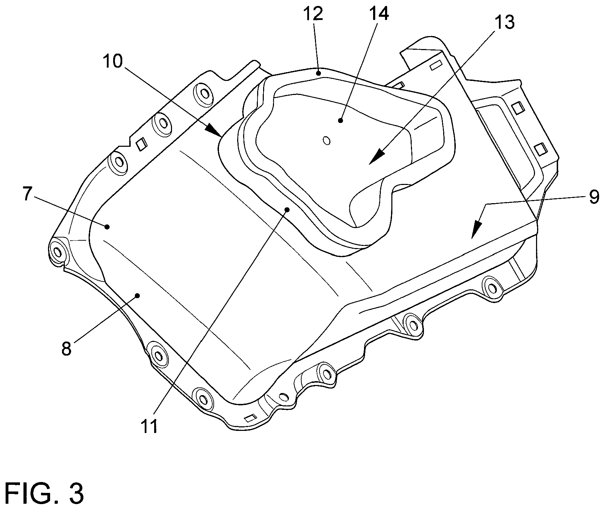

Figur 1 zeigt ein Kraftfahrzeug 1 mit einer Kraftfahrzeugtür 2 in einer Seitenansicht, wobei die Kraftfahrzeugtür 2 eine in einer Türebene verstellbare Fensterscheibe 3 aufweist. Einzelne Details der Kraftfahrzeugtür 2 sind in Figur 2 dargestellt, welche eine vergrößerte Seitenansicht der Kraftfahrzeugtür 2 aus Figur 1 zeigt. Die Kraftfahrzeugtür 2 weist zur Steuerung der Bewegung der Fensterscheibe 3 eine Antriebseinheit 4 auf, welche an einem Strukturbauteil 5 der Kraftfahrzeugtür 2 angeordnet ist. Die in Figur 2 dargestellte Öffnung 6 in der Kraftfahrzeugtür 2 ist durch eine in Figur 3 dargestellte Tragplatte 7 verschließbar. Die Tragplatte 7 ist als Türinnenverkleidung 8 ausgestaltet und weist eine dem Innenraum des Kraftfahrzeugs 1 zugewandte Sichtseite und eine der Sichtseite abgewandte Rückseite 9 auf. Auf dieser Rückseite 9 der Türinnenverkleidung 8 bzw. der Tragplatte 7 ist ein Schallschutzelement 10 angeordnet. Das Schallschutzelement 10 und die Türinnenverkleidung 8 bestehen aus dem gleichen Kunststoff und sind einteilig miteinander verbunden. Auf einem Steg 11 des Schallschutzelements 10 ist ein Funktionselement 12 aus einem anderen Material, beispielsweise aus einem Vlies oder einem Schaummaterial, angeordnet. Außerdem ist eine von dem Steg 11 eingeschlossene Fläche 13 der Rückseite 9 der Türinnenverkleidung 8 von einer Funktionsmatte 14 bedeckt, welche aus dem gleichen Material wie das Funktionselement 12 besteht.

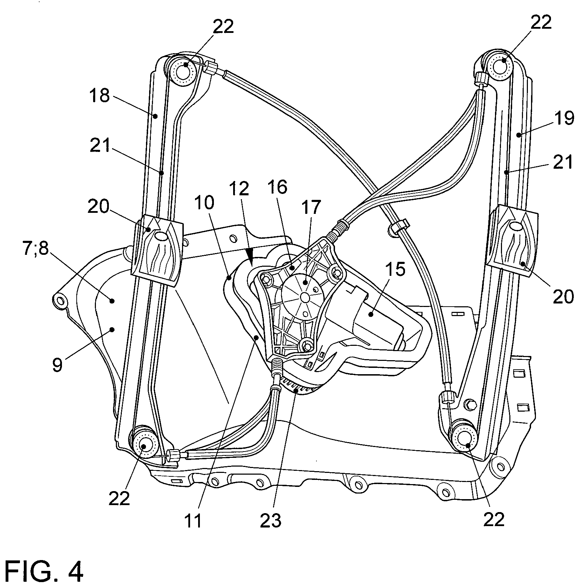

Figur 4 zeigt die Türinnenverkleidung 8 aus Figur 3 mit der Antriebseinheit 4 zur Verstellung der Fensterscheibe 3 in der Türebene. Die Antriebseinheit 4 weist einen Elektromotor 15 und eine in einem Seiltrommelgehäuse 16 angeordnete Seiltrommel 17 auf. Weiterhin zeigt Figur 4 zwei Fensterheberschienen 18, 19, an welchen jeweils ein Mitnehmer 20 zur vertikalen Verstellbewegung für die in Figur 1 dargestellte Fensterscheibe 3 geführt ist. Die beiden Mitnehmer 20 sind jeweils an einem Seil 21 befestigt, welches über drehbar gelagerte Umlenkrollen 22 geführt ist. Zur Erzielung einer gleichgerichteten Verschiebebewegung der Mitnehmer 20 ist das Seil 21 im Bereich zwischen den beiden Fensterheberschienen 18, 19 gekreuzt und mit der Antriebseinheit 4 verbunden.

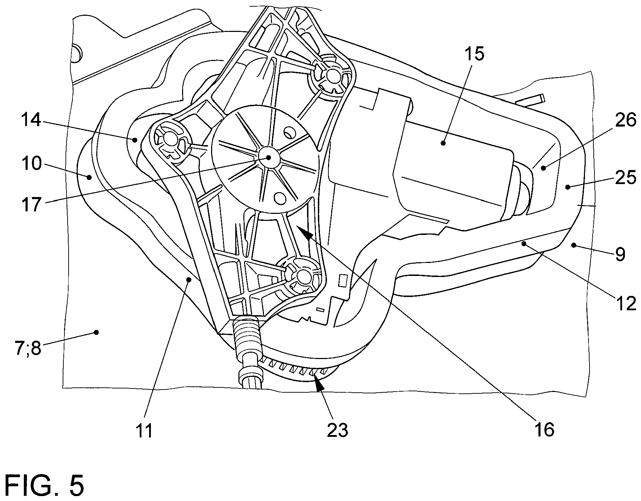

Wie in den Figuren 4 bis 6 zu erkennen ist, umschließt das als Steg 11 ausgebildete Schallschutzelement 10 und das auf dem Steg 11 angeordnete Funktionselement 12 den Elektromotor 15 umfänglich, sodass während des Betriebs des Elektromotors 15 entstehende Luftschallwellen durch Reflexion an einer Ausbreitung in Richtung der Türebene der Kraftfahrzeugtür 2 gehindert werden. Zur Kühlung des Elektromotors 15 weist das Schallschutzelement 10 in dem Steg 11 angeordnete Belüftungsschlitze 23 auf, welche in den Figuren 4 und 5 zu erkennen sind.

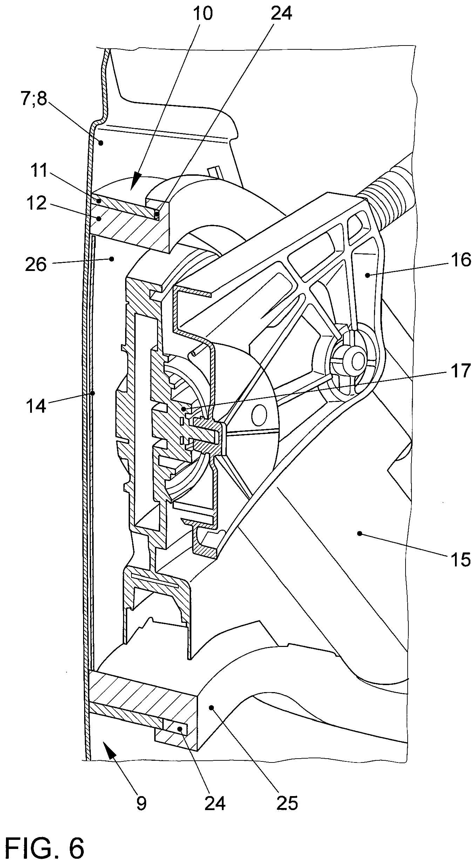

Das Funktionselement 12 ist, wie in Figur 6 dargestellt, formschlüssig mit dem Schallschutzelement 10 verbunden. Hierfür weist das Funktionselement 12 eine umlaufende Nut 24 auf, in welche das als Steg 11 ausgebildete Schallschutzelement 10 eingreift. Eine Stirnseite 25 des Schallschutzelements 10 bzw. des auf dem Steg 11 angeordneten Funktionselements 12 ist derart geformt, dass es an dem Strukturbauteil 5 der Kraftfahrzeugtür 2 (siehe Fig. 2) anliegt, sodass die Türinnenverkleidung 8, das Strukturbauteil 5 und das Schallschutzelement 10 einen abgeschlossenen Raum 26 bilden, in welchem der Elektromotor 15 bzw. die Antriebseinheit 4 angeordnet ist.

**Bezugszeichenliste**

| | | | |
|---|---|---|---|
| 1 | Kraftfahrzeug | 15 | Elektromotor |
| 2 | Kraftfahrzeugtür | | |
| 3 | Fensterscheibe | 16 | Seiltrommelgehäuse |
| 4 | Antriebseinheit | 17 | Seiltrommel |
| 5 | Strukturbauteil | 18 | Fensterheberschiene |
| | | 19 | Fensterheberschiene |
| 6 | Öffnung | 20 | Mitnehmer |
| 7 | Tragplatte | | |
| 8 | Türinnenverkleidung | 21 | Seil |
| 9 | Rückseite | 22 | Umlenkrolle |
| 10 | Schallschutzelement | 23 | Belüftungsschlitz |
| | | 24 | Nut |
| 11 | Steg | 25 | Stirnseite |
| 12 | Funktionselement | | |
| 13 | Fläche | 26 | Raum |
| 14 | Funktionsmatte | | |

## Patentansprüche

1. Kraftfahrzeugtür (2) mit einer einen Elektromotor (15) aufweisenden Antriebseinheit (4) zur Steuerung der Bewegung einer Fensterscheibe (3) in einer durch die Kraftfahrzeugtür (2) gebildeten Türebene, wobei eine Tragplatte (7) der Kraftfahrzeugtür (2) mit einem zumindest den Elektromotor (15) der Antriebseinheit (4) umfänglich umschließenden Schallschutzelement (10) verbunden ist, welches derart ausgebildet und angeordnet ist, dass während des Betriebs des Elektromotors (15) entstehende Luftschallwellen durch Reflexion an einer Ausbreitung in Richtung der Türebene der Kraftfahrzeugtür (2) gehindert werden, wobei die Tragplatte (7) als Türinnenverkleidung (8) ausgebildet ist, welche eine dem Kraftfahrzeuginnenraum zugewandte Sichtseite und eine dem Kraftfahrzeuginnenraum abgewandte Rückseite (9) aufweist, und wobei das Schallschutzelement (10) auf der Rückseite (9) der Türverkleidung (8) angeordnet ist, **dadurch gekennzeichnet, dass** das Schallschutzelement (10) ein Funktionselement (12) aus einem den Luftschall dämmenden und/oder dämpfenden Material aufweist, welches formschlüssig mit dem Schallschutzelement (10) verbunden ist, dass die durch das Schallschutzelement (10) eingeschlossene Fläche (13) auf der Rückseite (9) der Türinnenverkleidung (8) von einer Funktionsmatte (14) aus einem den Luftschall dämmenden und/oder dämpfenden Material abgedeckt ist, und dass die Funktionsmatte (14) und das Funktionselement (12) einteilig ausgebildet sind.

2. Kraftfahrzeugtür (2) nach Anspruch 1, **dadurch gekennzeichnet, dass** das Schallschutzelement (10) stoffschlüssig und/oder formschlüssig und/oder kraftschlüssig mit der Türinnenverkleidung (8) verbunden ist.

3. Kraftfahrzeugtür (2) nach Anspruch 1 oder 2, **dadurch gekennzeichnet, dass** das Schallschutzelement (10) und die Türinnenverkleidung (8) aus dem gleichen Kunststoff bestehen und/oder dass das Schallschutzelement (10) und die Türinnenverkleidung (8) einteilig ausgebildet sind.

4. Kraftfahrzeugtür (2) nach Anspruch 1 oder 2, **dadurch gekennzeichnet, dass** das Schallschutzelement (10) und die Türinnenverkleidung (8) aus unterschiedlichen Kunststoffen bestehen und/oder dass das Schallschutzelement (10) und die Türinnenverkleidung (8) im Zweikomponenten-Spritzgießverfahren herstellbar sind.

5. Kraftfahrzeugtür (2) nach zumindest einem der vorangehenden Ansprüche, **dadurch gekennzeichnet, dass** das Schallschutzelement (10) ringförmig ausgebildet ist und/oder dass das Schallschutzelement (10) als Steg (11) ausgebildet ist, welcher sich aus einer Ebene der Türinnenverkleidung (8) hinaus, insbesondere annähernd orthogonal zu dieser erstreckt, und die Abmessungen des Stegs (11) in Richtung dieser Erstreckung zumindest annähernd den Abmessungen des Elektromotors (15) in derselben Richtung entsprechen.

6. Kraftfahrzeugtür (2) nach zumindest einem der vorangehenden Ansprüche, **dadurch gekennzeichnet, dass** das Schallschutzelement (10) ein Funktionselement (12) aus einem Schaum oder Vlies aufweist.

7. Kraftfahrzeugtür (2) nach Anspruch 5 oder 6, **dadurch gekennzeichnet, dass** das Funktionselement (12) auf den Steg (11) aufsteckbar ist.

8. Kraftfahrzeugtür (2) nach zumindest einem der vorangehenden Ansprüche, **dadurch gekennzeichnet, dass** eine der Türinnenverkleidung (8) abgewandte Stirnseite (25) des Schallschutzelements (10) derart an einem Strukturbauteil (5) der Kraftfahrzeugtür (2) anliegt, dass die Türinnenverkleidung (8), das Strukturbauteil (5) und das Schallschutzelement (10) einen abgeschlossenen Raum (26) bilden, in welchem zumindest der Elektromotor (15) der Antriebseinheit (4) angeordnet ist.

9. Kraftfahrzeugtür (2) nach zumindest einem der vorangehenden Ansprüche, **dadurch gekennzeichnet, dass** das Schallschutzelement (10) zumindest abschnittsweise Belüftungsschlitze (23) zur Kühlung des Elektromotors (15) der Antriebseinheit (4) aufweist.

## Claims

1. Motor vehicle door (2) having a drive unit (4) comprising an electric motor (15) for controlling the movement of a window glass (3) in a door plane that is formed by the motor vehicle door (2), wherein a support plate (7) of the motor vehicle door (2) is connected to a sound protection element (10) that entirely envelopes at least the electric motor (15) of the drive unit (4), said sound protection element (10) being configured and disposed in such a manner that airborne sound waves that are created during the operation of the electric motor (15) by way of reflection are prevented from diffusing in the direction of the door plane of the motor vehicle door (2), wherein the support plate (7) is configured as door interior trim (8) which has a visible side that faces the motor vehicle cabin and a rear side (9) that faces away from the motor vehicle cabin, and wherein the sound protection element (10) is disposed on the rear side (9) of the door trim (8), **characterized in that** the sound protection element (10) has a functional element (12) from a material that deadens and/or damps the airborne sound and that is connected to the sound protection element (10) in a form-fitting manner, **in that** the area (13) that is enclosed by the sound protection element (10) on the rear side (9) of the door interior trim (8) is covered by a functional mat (14) from a material that deadens and/or damps the airborne sound, and **in that** the functional mat (14) and the functional element (12) are configured so as to be integral.

2. Motor vehicle door (2) according to Claim 1, **characterized in that** the sound protection element (10) is connected to the door interior trim (8) in a materially integral and/or form-fitting and/or force-fitting manner.

3. Motor vehicle door (2) according to either of Claims 1 and 2, **characterized in that** the sound protection element (10) and the door interior trim (8) are composed of the same plastics material, and/or **in that** the sound protection element (10) and the door interior trim (8) are configured so as to be integral.

4. Motor vehicle door (2) according to either of Claims 1 and 2, **characterized in that** the sound protection element (10) and the door interior trim (8) are composed of different plastics materials, and/or **in that** the sound protection element (10) and the door interior trim (8) are producible by the two-component injection moulding method.

5. Motor vehicle door (2) according to at least one of the preceding claims, **characterized in that** the sound protection element (10) is configured so as to be annular, and/or **in that** the sound protection element (10) is configured as a web (11) which extends outwardly from a plane of the door interior trim (8), in particular in a manner that is approximately orthogonal to said plane, and the dimensions of the web (11) in the direction of this extent correspond at least approximately to the dimensions of the electric motor (15) in the same direction.

6. Motor vehicle door (2) according to at least one of the preceding claims, **characterized in that** the sound protection element (10) has a functional element (12) from a foam or a non-woven material.

7. Motor vehicle door (2) according to either of Claims 5 and 6, **characterized in that** the functional element (12) is plug-fittable onto the web (11).

8. Motor vehicle door (2) according to at least one of the preceding claims, **characterized in that** an end side (25) of the sound protection element (10) that faces away from the door interior trim (8) bears on a structural component (5) of the motor vehicle door (2) in such a manner that the door interior trim (8), the structural component (5), and the sound protection element (10) form a closed space (26) in which at least the electric motor (15) of the drive unit (4) is disposed.

9. Motor vehicle door (2) according to at least one of the preceding claims, **characterized in that** the sound protection element (10) at least in portions has ventilation slots (23) for cooling the electric motor (15) of the drive unit (4).

## Revendications

1. Porte de véhicule automobile (2) comprenant une unité d'entraînement (4) présentant un moteur électrique (15) pour commander le mouvement d'une vitre de fenêtre (3) dans un plan de porte formé par la porte de véhicule automobile (2), une plaque de support (7) de la porte de véhicule automobile (2) étant raccordée à un élément d'insonorisation (10) entourant au moins le moteur électrique (15) de l'unité d'entraînement (4) sur son pourtour, lequel élément d'insonorisation est réalisé et disposé de telle sorte que les ondes sonores dans l'air, se produisant pendant le fonctionnement du moteur électrique (15), ne puissent pas se propager par réflexion dans la direction du plan de porte de la porte de véhicule automobile (2), la plaque de support (7) étant réalisée sous forme d'habillage intérieur de porte (8) qui présente un côté visible tourné vers l'habitacle du véhicule automobile et un côté arrière (9) opposé à l'habitacle du véhicule automobile, l'élément d'insonorisation (10) étant disposé sur le côté arrière (9) de l'habillage de porte (8), **caractérisée en ce que** l'élément d'insonorisation (10) présente un élément fonctionnel (12) en matériau atténuant et/ou amortissant le bruit aérien, qui est raccordé par correspondance de formes à l'élément d'insonorisation (10), **en ce que** la surface (13) enfermée par l'élément d'insonorisation (10) est recouverte du côté arrière (9) de l'habillage intérieur de porte (8) par un tapis fonctionnel (14) en matériau atténuant et/ou amortissant le bruit aérien, et **en ce que** le tapis fonctionnel (14) et l'élément fonctionnel (12) sont réalisés d'une seule pièce.

2. Porte de véhicule automobile (2) selon la revendication 1, **caractérisée en ce que** l'élément d'insonorisation (10) est raccordé par liaison de matière et/ou par engagement par correspondance de formes et/ou par engagement par force à l'habillage intérieur de porte (8).

3. Porte de véhicule automobile (2) selon la revendication 1 ou 2, **caractérisée en ce que** l'élément d'insonorisation (10) et l'habillage intérieur de porte (8) se composent du même plastique et/ou **en ce que** l'élément d'insonorisation (10) et l'habillage intérieur de porte (8) sont réalisés d'une seule pièce.

4. Porte de véhicule automobile (2) selon la revendication 1 ou 2, **caractérisée en ce que** l'élément d'insonorisation (10) et l'habillage intérieur de porte (8) se composent de plastiques différents et/ou **en ce que** l'élément d'insonorisation (10) et l'habillage intérieur de porte (8) peuvent être fabriqués par un procédé de moulage par injection à deux composants.

5. Porte de véhicule automobile (2) selon au moins l'une quelconque des revendications précédentes, **caractérisée en ce que** l'élément d'insonorisation (10) est réalisé sous forme annulaire et/ou **en ce que** l'élément d'insonorisation (10) est réalisé sous forme de nervure (11) qui s'étend au-delà d'un plan de l'habillage intérieur de porte (8), en particulier approximativement perpendiculairement à celui-ci, et les dimensions de la nervure (11) dans la direction de cette étendue correspondent approximativement aux dimensions du moteur électrique (15) dans la même direction.

6. Porte de véhicule automobile (2) selon au moins l'une quelconque des revendications précédentes, **caractérisée en ce que** l'élément d'insonorisation (10) présente un élément fonctionnel (12) en mousse ou en non-tissé.

7. Porte de véhicule automobile (2) selon la revendication 5 ou 6, **caractérisée en ce que** l'élément fonctionnel (12) peut être enfiché sur la nervure (11).

8. Porte de véhicule automobile (2) selon au moins l'une quelconque des revendications précédentes, **caractérisée en ce qu'**un côté frontal (25) opposé à l'habillage intérieur de porte (8) de l'élément d'insonorisation (10) s'applique contre un composant structurel (5) de la porte de véhicule automobile (2) de telle sorte que l'habillage intérieur de porte (8), le composant structurel (5) et l'élément d'insonorisation (10) forment un espace fermé (26) dans lequel est disposé au moins le moteur électrique (15) de l'unité d'entraînement (4).

9. Porte de véhicule automobile (2) selon au moins l'une quelconque des revendications précédentes, **caractérisée en ce que** l'élément d'insonorisation (10) présente au moins en partie des fentes d'aération (23) pour refroidir le moteur électrique (15) de l'unité d'entraînement (4).
